# EUROPÄISCHE PATENTSCHRIFT

(11) **EP 4 096 432 B1**
(45) Veröffentlichungstag und Bekanntmachung des Hinweises auf die Patenterteilung: **23.10.2024**
(21) Anmeldenummer: 21703634.2
(22) Anmeldetag: 29.01.2021
(51) Int. Cl.: A23L 5/10, A23B 7/015, A23L 3/32, A23L 5/20, A23L 5/30, A23L 19/00, A23L 19/18, A47J 37/12

(54) **VERFAHREN ZUM FRITTIEREN EINES NAHRUNGSMITTELS MIT PERMEABILISIERTEN ZELLMEMBRANEN UND VORRICHTUNG ZUR HERSTELLUNG EINES FRITTIERTEN NAHRUNGSMITTELS**
METHOD FOR FRYING A FOODSTUFF WITH PERMEABILIZED CELL MEMBRANES, AND DEVICE FOR PRODUCING A FRIED FOODSTUFF
PROCÉDÉ POUR FAIRE FRIRE UN PRODUIT ALIMENTAIRE À MEMBRANES CELLULAIRES RENDUES PERMÉABLES ET DISPOSITIF POUR FABRIQUER UN PRODUIT ALIMENTAIRE FRIT

(30) Priorität: 31.01.2020 DE 102020201191
(43) Veröffentlichungstag der Anmeldung: 07.12.2022
(73) Patentinhaber: Elea Service GmbH, 49610 Quakenbrück (DE)
(72) Erfinder: HILL, Kevin, 49074 Osnabrück (DE); OSTERMEIER, Robin, 49090 Osnabrück (DE); TÖPFL, Stefan, 49076 Osnabrück (DE)
(74) Vertreter: Grünecker Patent- und Rechtsanwälte PartG mbB
(86) Internationale Anmeldenummer: PCT/EP2021/052109
(87) Internationale Veröffentlichungsnummer: WO 2021/152091

(56) Entgegenhaltungen:
- EP-A1- 1 552 754
- WO-A1-2011/109405
- US-A1- 2017 035 078
- BOTERO-URIBE MARIA ET AL: "Effect of pulsed electrical fields on the structural properties that affect french fry texture during processing", TRENDS IN FOOD SCIENCE AND TECHNOLOGY, vol. 67, 1 September 2017 (2017-09-01), GB, pages 1 - 11, XP055799169, ISSN: 0924-2244, DOI: 10.1016/j.tifs.2017.05.016

## Beschreibung

Die vorliegende Erfindung betrifft ein Verfahren zum Frittieren eines Nahrungsmittels in einem Frittiermedium, welches das Nahrungsmittel umgibt.

Die vorliegende Erfindung betrifft ferner eine Vorrichtung zur Herstellung eines frittierten Nahrungsmittels, insbesondere zur Durchführung des erfindungsgemäßen Verfahrens, die mindestens einen Frittierbehälter zur Aufnahme eines Frittiermediums und des zu frittierenden Nahrungsmittels, wenigstens eine Temperiervorrichtung zum Einstellen der Temperatur des Frittiermediums im Frittierbehälter, und eine Kontrollvorrichtung umfasst, die ausgebildet ist, Temperatursignale an die wenigstens eine Temperiervorrichtung zu senden und dadurch die Temperatur des Frittiermediums im Frittierbehälter einzustellen.

Frittieren ist ein Garprozess, bei dem wasserhaltige Lebensmittel vollständig in ein Frittiermedium, meist Speiseöl oder -fett eintauchen. Frittiermedien haben eine hohe Wärmekapazität und können Wärme bei Temperaturen weit über dem Siedepunkt des Wassers auf das Lebensmittel übertragen. Das im Lebensmittel gebundene Wasser wird in Folge der Verdunstung in der Randzone nach und nach aus dem Inneren an die Randschicht geführt, um schließlich je nach Struktur der Kruste mehr oder weniger schnell an das umgebende Öl abgegeben zu werden. Wenn kein Wasser mehr aus dem Inneren des Lebensmittels an die Randschicht herangetragen wird, steigt die Temperatur des Nahrungsmittels von außen nach innen zunehmend auf über 100 °C an. Es beginnt die Ausbildung des typischen Frittieraromas und -geschmacks.

Steigt die Temperatur in der Randzone in Folge der abnehmenden Feuchtigkeit auf mehr als 120 °C an, kann insbesondere in Getreide- und Kartoffelprodukten bei Anwesenheit reduzierender Zucker und Asparagin die Bildung von Acrylamid einsetzen. Die Acrylamidbildung kann durch eine möglichst kurze Frittierdauer bei nicht zu hohen Temperaturen deutlich minimiert werden. Mit zunehmender Frittierzeit nimmt das Nahrungsmittel zudem immer mehr Frittiermedium auf. Die Fett- bzw. Ölaufnahme ist aber aus gesundheitlichen und geschmacklichen Gründen auf ein möglichst geringes Maß zu begrenzen.

Die Fettaufnahme ist besonders hoch, wenn es beim Einbringen des Nahrungsmittels in das Frittiermedium zu einem explosionsartigen Abkochen kommt. Dies hat zur Folge, dass der Dampfdruck in dem Nahrungsmittel die Zellwände zersprengt, so dass große Poren entstehen, die sich bei geringer werdendem Wassergehalt mit Fett füllen. Um die Fettaufnahme zu minimieren, ist in der CH 620576 vorgesehen, Kartoffeln zunächst bei einer konstanten Temperatur von 135 bis 150 °C zu frittieren und erst nach Transport in eine andere Zone, die Frittiertemperatur auf 175 °C ansteigen zu lassen. Die Kartoffeln werden unmittelbar nach dem Verlassen des Fettbades mit überhitztem Dampf einer Mindesttemperatur von 100 °C behandelt. Diese Lösung ist apparativ aufwendig und verlängert die Frittierzeit, da das Nahrungsmittel zunächst bei relativ geringen Temperaturen frittiert wird.

Aus der US 2017/035078 A1 ist ein Verfahren zur Herstellung von Kartoffelchips bekannt. Dabei werden ganze Kartoffeln oder Kartoffelscheiben mit PEF behandelt und anschließend in einem 2-stufigen Verfahren frittiert. Das 2-stufige Frittierverfahren umfasst einen Vorfrittierschritt. Die Starttemperatur des Vorfrittierens liegt bei 320°F bis 380°F (160°C bis 193,33°C) und reduziert sich bis zu einer abschließenden Vorfrittiertemperatur von 290°F bis 330°F (143,33°C bis 165,56°C).

EP 1 552 754 A1 betrifft ein Verfahren zum Frittieren von Frittiergut in einem Wärmeübertragungsfluid (z.B. Fett), bei dem das Frittiergut bei sukzessiv abnehmender Temperatur des Wärmeübertragungsfluides gegart wird. Eine Vorrichtung zur Durchführung dieses Verfahrens umfasst eine Pumpe, mittels derer das Fett in einem Kreislauf geführt und in einem Frittierbehälter mit dem Frittiergut in Kontakt gebracht wird. Zum Garen des Frittiergutes sind eine Abfolge von Frittierkammern mit unterschiedlichen Temperaturen des Wärmeübertragungsfluides vorgesehen.

Die wissenschaftliche Veröffentlichung von Botero-Uribe, Maria et al.: "Effect of pulsed electric fields on the structural properties that affect fresh fry texture during processing", Trends in Food Science & Technology, Bd. 67 (2017), Seiten 1-11, befasst sich mit den Auswirkungen gepulster elektrischer Felder auf Struktureigenschaften und auf die Textur von Pommes Frites. Darin ist angeführt, dass PEF in der Kartoffelindustrie eingesetzt wird, aufgrund vielversprechender Ergebnisse hinsichtlich der Reduzierung von Schneidkräften, vorbereiteter Trocknungsraten sowie einer geringeren Ölaufnahme.

Um ein explosionsartiges Abkochen zu vermeiden, können die Zellwände des Nahrungsmittels vor dem Frittieren permeabilisiert werden. Die Permeabilisation kann durch Zugabe eines Permeabilisierungsmittels, durch kontrollierte Druck- und/oder Temperatureinwirkung, oder durch eine Elektroporation erfolgen.

Die technische Umsetzung eines Verfahrens zum Frittieren permeabilisierter Nahrungsmittel bzw. einer Vorrichtung zur Durchführung eines solchen Verfahrens ist jedoch problematisch. Kartoffeln, die mittels PEF permeabilisiert wurden, können in Fritteusen nur eingeschränkt eingesetzt werden. Die anfangs hohe Temperatur des Frittiermediums fällt bei permeabilisierten Nahrungsmitteln überraschenderweise stärker als üblich ab und die Temperatur steigt erst nach Verdampfen des Hauptteils des Wassers verzögert und langsam wieder an. Dadurch verlängert sich je nach eingesetzter Fritteuse und Heizleistung möglicherweise die Frittierzeit und aufgrund der langsameren Aufheizzeit wird die Bildung unerwünschter, thermisch induzierter Nebenprodukte, wie Acrylamid begünstigt sowie mehr Frittiermedium vom Nahrungsmittel aufgenommen.

Die objektive technische Aufgabe der vorliegenden Erfindung ist somit ein Verfahren und eine Vorrichtung zum Frittieren permeabilisierter Nahrungsmittel bereitzustellen.

Die Aufgabe wird erfindungsgemäß gelöst durch ein Verfahren zum Frittieren eines Nahrungsmittels, dessen Zellmembran permeabilisiert wurde, wobei die Temperatur eines Frittiermediums, welches das Nahrungsmittel umgibt, von einer Anfangstemperatur zu Beginn des Frittierens gemäß einem vorbestimmten Temperatur-Profil kontrolliert auf eine Endtemperatur abgesenkt wird, wobei das Nahrungsmittel kontinuierlich frittiert und dabei entlang einer Bewegungsrichtung durch Zonen mit unterschiedlichen Temperaturen des Frittiermediums bewegt wird, und wobei das aus einer Zone entnommene Frittiermedium in eine in Bewegungsrichtung nachgelagerte Zone eingeleitet wird.

Weiterhin wird die Aufgabe gelöst durch eine Vorrichtung zur Herstellung eines frittierten Nahrungsmittels, insbesondere zur Durchführung des erfindungsgemäßen Verfahrens, die mindestens einen Frittierbehälter zur Aufnahme eines Frittiermediums und des zu frittierenden Nahrungsmittels, wenigstens eine Temperiervorrichtung zum Einstellen der Temperatur des Frittiermediums im Frittierbehälter, eine Transportvorrichtung (30) zum Fördern des Nahrungsmittels entlang einer Bewegungsrichtung durch den wenigstens einen Frittierbehälter und eine Kontrolleinrichtung, in der ein Temperatur-Profil mit einer Anfangstemperatur und einer unter der Anfangstemperatur liegenden Endtemperatur hinterlegt ist, umfasst, wobei die Kontrolleinrichtung ausgebildet ist, Temperatursignale an die wenigstens eine Temperiervorrichtung zu senden und dadurch die Temperatur des Frittiermediums im Frittierbehälter gemäß dem Temperatur-Profil einzustellen, wobei der Frittierbehälter vorzugsweise in wenigstens zwei Zonen unterteilt und wobei die Temperiervorrichtung in jeder der Zonen ein Zulauf zur Zugabe eines vortemperierten Frittiermediums sowie ein Ablauf zur Entnahme vom Frittiermedium umfasst und eine Umlaufleitung vom Ablauf einer Zone mit dem Zulauf der nachgelagerten Zone verbunden ist.

Die vorliegende Erfindung begünstigt das Frittieren eines Nahrungsmittels, dessen Zellmembran vor dem Frittieren permeabilisiert wurde. Ein Nahrungsmittel, dessen Zellmembran vor dem Frittieren permeabilisiert wurde, ist allerdings, wie eingangs erläutert, nicht unproblematisch hinsichtlich des Frittierens. Es hat sich allerdings überraschenderweise gezeigt, dass die kontrollierte Absenkung der Temperatur des Frittiermediums gemäß einem vorbestimmten Temperatur-Profil einer unerwünschten Acrylamidbildung und hohen Aufnahme des Frittiermediums in einem permeabilisierten Nahrungsmittel vorbeugt.

Unter Frittiermedium sind Fette, Fettöle, also Speisefett bzw. Speiseöl, auch Frittierfett oder Frittieröl genannt, gefasst. Wird die Temperatur des Frittiermediums kontrolliert, also gesteuert oder geregelt gemäß einem vorbestimmten Temperatur-Profil abgesenkt, kann insbesondere der überraschend hohe Temperaturabfall zu Beginn des Frittierens kompensiert und die Temperatur des Frittiermediums gezielt und schnell auf die gewünschte Anfangstemperatur eingestellt werden. Bei der erfindungsgemäßen Vorrichtung ist dazu eine Kontrolleinrichtung, beispielsweise eine Regel- oder Steuereinrichtung vorgesehen, welche die wenigstens eine Temperiervorrichtung kontrolliert und die Temperatur des Frittiermediums im Frittierbehälter gemäß dem Temperatur-Profil einstellt, also kontrolliert gemäß dem Temperatur-Profil absenkt. Unter einem Temperatur-Profil ist ein zeitlicher und/oder räumlicher Temperaturverlauf zu verstehen.

Besonders effektiv kann das Nahrungsmittel einem elektrischen Feld ausgesetzt und auf diese Weise elektroporiert werden. Bei der Elektroporation wird die Zellmembran durch Anlegen eines elektrischen Feldes vorübergehend (reversibel) oder dauerhaft (irreversibel) permeabel. Das angelegte elektrische Feld kann einen kontrollierten Zellaufschluss bewirken, bei dem der Grad des Zellaufschlusses auf einen vorbestimmten Wert eingestellt wird. Die Elektroporation ist insofern vorteilhaft, als sie ein nicht-thermisch wirkendes Verfahren ist, bei dem keine Erwärmung im Sinne einer ohmschen Erhitzung stattfindet und keine wesentlichen thermischen Veränderungen der Inhaltsstoffe hervorgerufen werden. Die Elektroporation, insbesondere durch Einwirken gepulster elektrischer Felder (PEF) führt zu einem Zellaufschluss, der mit einer beschleunigten Wasserabgabe beim Trocknen oder Frittieren einhergeht. Dies führt zu einer schnelleren Trocknung sowie bei der Herstellung von Snackprodukten zur einer verbesserten Knusprigkeit. Die Elektroporation hat jedoch überraschenderweise auch nachteilige Auswirkungen auf das Frittieren, da bei zu schneller Wasserabgabe aufgrund der für das Verdampfen nötigen Energie unvorhersehenermaßen ein starker Temperaturabfall im Frittiermedium eintritt. Wesentlicher Vorteil des PEF-Verfahrens ist ein verbessertes Schnittverhalten, insbesondere bei pflanzlichen Produkten. Dies ist insbesondere bei der Herstellung von Nahrungsmitteln, wie Chips, vorteilhaft, da ein glatterer Schnitt und eine geringere Messerabnutzung die Folge des Zellaufschlusses sind. Der glattere Schnitt resultiert zudem in einer geringeren Freisetzung von Inhaltsstoffen, beispielsweise Stärke bei Kartoffelprodukten und damit einer höheren Produktausbeute und geringerem Aufwand für die Reinigung des Prozesswassers. Das erfindungsgemäß frittierte Nahrungsmittel kann insbesondere ein Snack-Produkt sein. Snack-Produkte sind konservierte Nahrungsmittel, die einen Imbiss, also eine Zwischenmahlzeit darstellen und oft als Fingerfood verbrauchsfertig verpackt angeboten werden. Beispiele für Snack-Produkte sind Knabberprodukte wie Kartoffelchips, oder andere Chips, beispielsweise Gemüse- oder Süßkartoffelchips. Das erfindungsgemäße Verfahren und die erfindungsgemäße Anlage können auch zum Frittieren anderer Nahrungsmittel, beispielsweise Pommes Frites eingesetzt werden.

Im Folgenden sind Weiterbildungen der Erfindung beschrieben, die unabhängig voneinander, beliebig miteinander kombinierbar und jeweils für sich betrachtet vorteilhaft sind.

Gemäß des erfindungsgemäßen Verfahrens wird das Nahrungsmittel kontinuierlich frittiert und dabei in einer Bewegungsrichtung durch mindestens zwei Zonen mit unterschiedlichen Temperaturen des Frittiermediums bewegt. Dazu wird ein Frittierbehälter in unterschiedliche Zonen unterteilt. Alternativ können wenigstens zwei Frittierbehälter in Reihe angeordnet sein (nicht erfindungsgemäß). Die aus dem ersten Frittierbehälter entnommenen Nahrungsmittel können, vorzugsweise kontinuierlich oder in regelmäßigen zeitlichen Abständen als Charge in den nachfolgenden Frittierbehälter überführt werden. Für diese Überführung kann beispielsweise eine Übergabe von einem zu einem nachgelagerten Frittierbehälter vorgesehen sein, um ein kontinuierliches Frittierverfahren zu gewährleisten. Auf diese Weise erzielt man ein räumliches Temperatur-Profil, bei dem unterschiedliche Temperaturen in den verschiedenen Zonen bzw. unterschiedlichen Frittierbehältern eingestellt werden können. Über die Fördergeschwindigkeit des zu frittierenden Nahrungsmittels durch die einzelnen Zonen kann die Verweildauer des Nahrungsmittels in der eingestellten Temperatur der jeweiligen Zone kontrolliert werden.

Es hat sich bei einer kontinuierlichen Verfahrensweise als überraschenderweise vorteilhaft herausgestellt, wenn die Temperatur der Zonen in Bewegungsrichtung sukzessive abnimmt. Durch eine sukzessive Abnahme ist zum einen gewährleistet, dass die Oberfläche des zu frittierenden Nahrungsmittels die erwünschte knusprige Eigenschaft erhält. Gleichzeitig wird die Temperatur im weiteren Verfahren gemäß dem vorgestimmten Temperatur-Profil auf ein Maß heruntergefahren, dass die maximale Frittierzeit und -temperatur optimiert und die Acrylamidbildung und Fettaufnahme minimiert.

Bei der erfindungsgemäßen Vorrichtung ist eine Transportvorrichtung zum Fördern des Nahrungsmittels entlang einer Bewegungsrichtung durch den wenigstens einen Frittierbehälter vorgesehen. Die Transportvorrichtung kann Paddel oder Bänder aufweisen. Es ist auch möglich, das Frittiermedium in Bewegungsrichtung fließen und dabei das Nahrungsmittel von fließendem Frittiermedium transportieren zu lassen. Dazu kann beispielsweise ein Frittiermedium-Zulauf im Bereich der Nahrungsmittelzuführung und ein Ablauf im Bereich der Nahrungsmittelentnahme vorgesehen sein.

Gemäß einer weiteren Ausführungsform kann die Temperatur in jeder Zone konstant gehalten werden. Jede Zone, sei es ein bestimmter, durch die Temperatur des Frittiermediums bestimmter Bereich in einem Frittierbehälter bzw. ein ganzer Frittierbehälter kann somit individuell und kontrolliert auf eine im Temperatur-Profil definierte Temperatur kontrolliert werden. Dies ermöglich auf einfache Weise, die Temperatur des Frittiermediums gemäß dem vorbestimmten Temperatur-Profil kontrolliert abzusenken.

Gemäß einer Ausführungsform kann, insbesondere beim diskontinuierlichen Frittieren, die Temperatur in der in Bewegungsrichtung ersten Zone bei höchstens 175 °C und in der in Bewegungsrichtung letzten Zone bei über 125 °C liegen. Bei einer Anfangstemperatur von höchstens 175 °C wird eine Acrylamidbildung bei beispielsweise Kartoffelprodukten wie Chips oder Pommes Frites vermieden und ein gemäß dem vorbestimmten Temperatur-Profil kontrolliertes Absenken in Bewegungsrichtung auf über 125 °C, vorzugsweise über 140 °C, und besonders bevorzugt auf über 150 °C stellt sicher, dass der Frittiervorgang schnellstmöglich unter minimaler Frittiermediumaufnahme des Nahrungsmittels vonstatten geht.

Um die Temperatur konstant zu halten, kann die erfindungsgemäße Vorrichtung wenigstens einen Sensor zur Erfassung der Temperatur des Frittiermediums im Frittierbehälter aufweisen. Der wenigstens eine Sensor kann Temperaturdaten-übertragend mit der Kontrollvorrichtung verbunden sein und somit einen Abgleich der Ist-Temperatur des Frittiermediums im Frittierbehälter mit einer vorbestimmten Soll-Temperatur des Temperatur-Profils in Echtzeit ermöglichen. Bei einer Abweichung zwischen Ist-Temperatur und Soll-Temperatur kann die Kontrolleinrichtung ein entsprechendes Regelsignal an die wenigstens eine Temperiervorrichtung senden, um die Abweichung auszugleichen und die Temperatur des Frittiermediums im Frittierbehälter zu erhöhen bzw. abzusenken. Ausgestaltung mit verschiedenen Temperaturzonen innerhalb eines Frittierbehälters können mehrere Sensoren zur Temperaturerfassung, beispielsweise einen Sensor in jeder der Zonen des Frittierbehälters umfassen. Ein entsprechender Algorithmus in der Kontrolleinrichtung gleicht ab, ob die gemessene Temperatur in der jeweiligen Zone der gemäß dem Temperatur-Profil entsprechend vorgegebenen Temperaturzone zu diesem Zeitpunkt des Frittiervorgangs entspricht. Auf diese Weise ist eine Temperatursteuerung bzw. ein geschlossener Regelkreis zur Temperaturregelung möglich.

Der Frittierbehälter kann temperierbar ausgestaltet sein. Der Frittierbehälter kann beispielsweise ein oder mehrere Heizelemente umfassen, die seine Wandung, beispielsweise seinen Boden temperierbar ausgestalten. Es kann ein Heizelement je Temperaturzone vorhanden sein.

Die Temperiervorrichtung umfasst wenigstens einen Zulauf am Frittierbehälter für vortemperiertes Frittiermedium. Der Frittierbehälter kann ferner ein Ablauf sowie eine Umwälzvorrichtung für den Transport von Frittiermedium vom Ablauf zum Zulauf einer Zone vorgesehen sein. Auf diese Weise kann das Frittiermedium, beispielsweise in jeder Zone, umgewälzt werden. Die Umwälzung vom vortemperierten Frittiermedium, dessen Temperatur insbesondere höher als die Temperatur des Frittiermediums im Frittierbehälter ist, hat den Vorteil, dass auf schnelle Weise die Temperatur des Frittiermediums eingestellt und eine interne Temperiervorrichtung des Frittierbehälters unterstützt werden kann. Dies ist insofern vorteilhaft, als eine interne Temperiervorrichtung, insbesondere bei dem überraschend stark ausgeprägten Temperaturabfall zu Beginn des Frittierens permeabilisierter Nahrungsmittel, unterstützt und die Temperatur durch die Zugabe extern vortemperierten Frittiermediums sehr schnell wieder auf die angedachten höheren Temperaturen bringen kann.

Bei dem Verfahren bzw. Vorrichtung zum kontinuierlichen Frittieren von Nahrungsmitteln, bei dem die Temperatur der Zonen in Bewegungsrichtung sukzessive abnimmt, wird das aus einer Zone entnommene Frittiermedium in eine in Bewegungsrichtung nachgelagerte Zone eingeleitet. Dies ist insbesondere dann vorteilhaft, wenn das aus der einen Zone entnommene Frittiermedium als vortemperiertes Frittiermedium einer nachgelagerten Zone dient, d.h. dass die Temperatur des entnommenen Frittiermediums höher als die gemäß Temperatur-Profil einzustellende Temperatur in einer nachgelagerten Zone ist. Um eine effektive Regelung zu erzielen, kann die Übertragungsleitung, mittels welcher der Transport vom Ablauf einer Zone zum Zulauf einer nachgelagerten Zone stattfindet, mit einem Sensor zur Erfassung der Temperatur des umgewälzten Frittiermediums ausgestaltet sein.

Die Temperatur des Frittiermediums im Frittierbehälter insgesamt, sowie in einer Zone kann durch die Menge und/oder die Temperatur des in die Zone einfließenden Frittiermediums kontrolliert werden. Bei der Vorrichtung kann dazu ein entsprechender Verteiler, beispielsweise ein Durchflussventil vorgesehen sein. Mittels entsprechender Sensoren, welche den Durchfluss messen, kann die eingeleitete Menge kontrolliert werden. Die Temperiervorrichtung kann ferner Wärmetauscher vorsehen, welche die Temperatur in einer Umwälzleitung bzw. einem Pufferbehälter, in dem vortemperiertes Frittiermedium vorgehalten wird, ermöglichen. Es können auch Sammelleitungen vorgesehen sein, welche das aus verschiedenen Ausflüssen austretende Frittiermedium auffangen und zu einem gemeinsamen Vorrat- bzw. Pufferbehälter transportieren.

Die vorliegende Erfindung ermöglicht, die Vorteile eines diskontinuierlichen Frittierverfahrens, wie bekannte Aufenthaltszeit, Chargentreue, Deklaration als *"Kettlechips"* auch bei permeabilisierten, z.B. elektroporierten Nahrungsmitteln nutzbar zu machen. Die Erfindung führt zu einem Endprodukt mit geringem Ausmaß an unerwünschten Bräunungsreaktionen, einer geringen Ölaufnahme, einer Reduktion der Frittierzeit und/oder Frittiertemperatur sowie eine Reduktion der Aufheizzeit zwischen zwei Chargen und damit einer Erhöhung der Produktionskapazität.

Im Folgenden ist die Erfindung anhand von Ausführungsbeispielen mit Bezug auf die beigefügten Figuren exemplarisch näher beschrieben. In den Figuren sind Elemente, die einander hinsichtlich Aufbau und/oder Funktion entsprechen, mit denselben Bezugszeichen versehen. Bei den einzelnen Ausführungsbeispielen gezeigte und beschriebene Merkmalskombinationen dienen lediglich zur Erläuterung. Nach Maßgabe der obigen Ausführungen kann ein Merkmal eines Ausführungsbeispiels weggelassen werden, wenn es auf dessen technischen Effekt bei einer bestimmten Anwendung nicht ankommt. Umgekehrt kann nach Maßgabe der obigen Ausführungen bei einem Ausführungsbeispiel ein weiteres Merkmal hinzugefügt werden, wenn dessen technischer Effekt für eine bestimmte Anwendung vorteilhaft sein sollte.

Es zeigen:
- Fig. 1:: eine schematische Darstellung einer Vorrichtung zum Frittieren von Nahrungsmitteln;
- Fig. 2:: ein Temperatur-Profil, das in der Vorrichtung gemäß Fig. 1 zum Einsatz kommen kann;
- Fig. 3:: eine weitere Vorrichtung zum Frittieren von Lebensmitteln;
- Fig. 4:: ein Temperatur-Profil, das in der Vorrichtung gemäß Fig. 3 zum Einsatz kommen kann;
- Fig. 5:: eine Ausführungsform einer erfindungsgemäßen Vorrichtung zum Frittieren von Lebensmitteln; und
- Fig. 6:: eine weitere Vorrichtung zum Frittieren von Nahrungsmitteln.

Nachfolgend werden beispielhafte Vorrichtungen und Verfahren zum Frittieren eines Nahrungsmittels, dessen Zellmembran vor dem Frittieren permeabilisiert wurde, gemäß der vorliegenden Offenbarung und Erfindung unter Bezugnahme auf die Figuren vorgestellt.

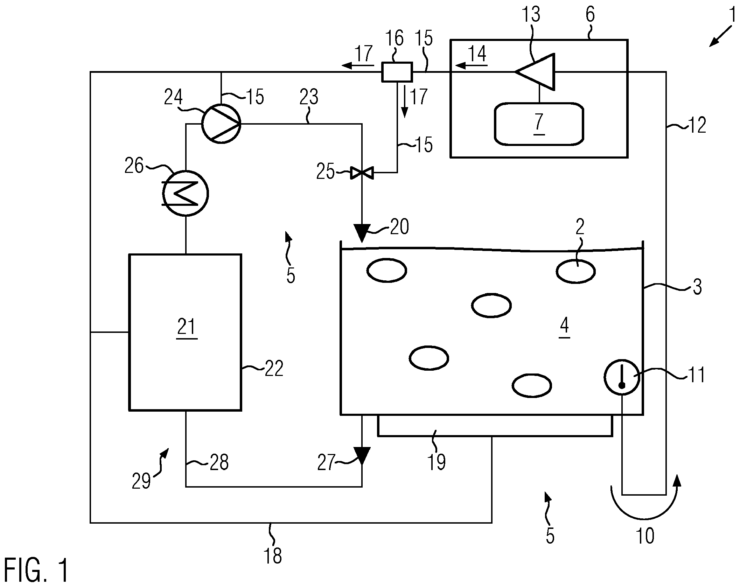

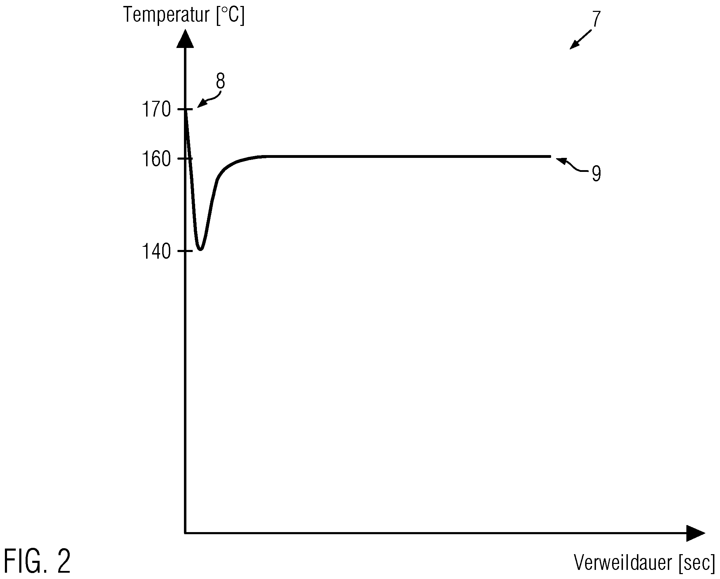

Eine erste Vorrichtung zum Herstellen eines frittierten Nahrungsmittels ist in Fig. 1 und ein Temperatur-Profil, das in dieser Vorrichtung verwendet wird, in Fig. 2 gezeigt.

Die Vorrichtung 1 der Fig. 1 zur Herstellung eines frittierten Nahrungsmittels 2 umfasst einen Frittierbehälter 3 zur Aufnahme eines Frittiermediums 4 und des zu frittierenden Nahrungsmittels 2. Sie umfasst eine Temperiervorrichtung 5 zum Einstellen, also zum Erhöhen und/oder Absenken der Temperatur des Frittiermediums 4 im Frittierbehälter 3. Die Vorrichtung 1 umfasst ferner eine Kontrolleinrichtung 6, beispielsweise eine Regeleinrichtung oder Steuereinrichtung, in der ein Temperatur-Profil 7 mit einer Anfangstemperatur 8 und einer unter der Anfangstemperatur 8 liegenden Endtemperatur 9 hinterlegt ist. Die Kontrolleinrichtung 6 ist ausgebildet, Signale an die wenigstens eine Temperiervorrichtung 5 zu senden und dadurch die Temperatur des Frittiermediums 4 im Frittierbehälter 3 gemäß dem Temperatur-Profil 7 einzustellen. Unter Einstellen der Temperatur des Frittiermediums 4 im Frittierbehälter 3 gemäß dem Temperatur-Profil 7 ist gemeint, dass die Temperatur des Frittiermediums 4 zeitlich und/oder räumlich im Frittierbehälter 3 kontrolliert so eingestellt und von der Anfangs- 8 auf die Endtemperatur 9 abgesenkt wird, wie es im hinterlegten Temperatur-Profil 7 vorbestimmt ist.

Bei der Ausführungsform der Fig. 1 und 2 wird ein zeitliches Temperatur-Profil 7 in einer Vorrichtung 1 eingesetzt, die das Nahrungsmittel 2 diskontinuierlich, als Batch, frittiert.

Die Vorrichtung umfasst einen Sensor 11 zur Erfassung der Temperatur des Frittiermediums 4 im Frittierbehälter 3. Der Sensor 11 ist ein Temperatursignal 10 ausgebend ausgestaltet und über eine Temperatursignalleitung 12 datenübertragend, nämlich das Temperatursignal 10 übertragend, mit der Kontrolleinrichtung 6 verbunden. Die Übertragung des Temperatursignals 10 ist in der Fig. 1 durch einen Pfeil angedeutet. Die Signalleitung 12 kann selbstverständlich sowohl kabelgebunden als auch kabellos, beispielsweise per Funk, Infrarot, WLAN oder Bluetooth erfolgen. Das Temperatursignal 10 wird von der Kontrolleinrichtung 6, welche die Vorrichtung so regelt, dass die Temperatur des Frittiermediums 4 in dem Frittierbehälter 3 gemäß dem vorbestimmten Temperatur-Profil 7 eingestellt wird, empfangen. Das Temperatursignal 10 wird an eine Vergleichseinrichtung 13 der Kontrolleinrichtung 6 gesendet, welche die Ist-Temperatur des Frittiermediums 4, für welche das ausgegebene Temperatursignal 10 repräsentativ ist, mit dem entsprechenden Soll-Temperaturwert des Temperatur-Profils 7 vergleicht. Im Falle einer Abweichung wird ein Regelsignal 14 von der Kontrolleinrichtung über eine Regelleitung 15 an eine Regelvorrichtung 16 ausgegeben. Die Regelvorrichtung ergreift geeignete Maßnahmen, um die Temperatur des Frittiermediums 4 im Frittierbehälter 3 auf den entsprechenden Temperaturwert gemäß Temperatur-Profil 7 einzustellen.

Wie dem zeitlichen Temperatur-Profil 7 der Fig. 2 zu entnehmen ist, beläuft sich die Anfangstemperatur 8 auf ca. 170 °C. Diese Anfangstemperatur fällt mit Zugabe des permeabilisierten Nahrungsmittels 2, dessen Temperatur vor dem Frittieren deutlich unter der Anfangstemperatur 8 liegt, zunächst sehr stark ab, wird aber gemäß Temperatur-Profil 7 sehr schnell wieder auf die gewünschte Endtemperatur 9, die bei ca. 160 °C liegt, eingestellt.

Bei einem diskontinuierlichen Frittieren von Nahrungsmitteln, deren Zellmembran permeabilisiert wurde, fällt die hohe Anfangstemperatur 8 nach Zugabe des Nahrungsmittels 2 überraschend stark auf einen Bereich von ca. 140 °C ab. Erst nach Verdampfen des Hauptanteils des Wassers aus dem Nahrungsmittel 2 steigt die Temperatur des Frittiermediums 4 wieder an. Durch den überraschend starken Temperaturabfall bedarf es bei herkömmlichen Fritteusen einer längeren Aufheizzeit, bis die gewünschte Endtemperatur 9 erreicht ist. Die längere Aufheizzeit führt zu unerwünschten, thermisch induzierten Nebenprodukten wie Acrylamid und einer wesentlich höheren Aufnahme von Frittiermedium 4 ins Nahrungsmittel 2.

Auch bei einem, nicht gezeigten, alternativen Verfahren des diskontinuierlichen Frittierens, bei welchem die Anfangstemperatur bei 130 °C bis 140 °C und die Endtemperatur bei um die 120 °C liegt, fällt die Temperatur des Frittiermediums 4 bei Zugabe des Nahrungsmittels 2 sehr stark, deutlich unter die einzustellende Endtemperatur ab.

Dem starken Temperaturabfall und langsamen Aufheizen wirkt die Vorrichtung entgegen durch das vorbestimmte Temperatur-Profil, das auf den starken Temperaturabfall eingestellt ist und ein rasches Aufheizen ermöglicht.

Zur Temperierung kann beispielsweise die Regelvorrichtung 16 ein Heizsignal 17 ausgeben und über eine Heizsignalleitung 18 an eine Heizvorrichtung 19 ausgeben, die am Frittierbehälter 4 angeordnet ist. Der Frittierbehälter kann selbst temperierbar ausgestaltet sein. In der gezeigten Ausführungsform liegt die Heizvorrichtung 19 am Boden des Frittierbehälters. Sie könnte auch in einem beliebigen anderen Bereich der Wandung des Frittierbehälters 4 angeordnet sein.

Allerdings ist die Heizleistung eines herkömmlichen Heizelementes einer Fritteuse in der Regel nicht stark genug, um den durch die Permeabilisierung des Nahrungsmittels hervorgerufenen überraschend starken Temperaturabfall im Frittiermedium 4 zeitnah zu kompensieren. Daher ist insbesondere für das diskontinuierliche Frittieren daher eine weitere Temperiervorrichtung 5 vorgesehen, die einen Zulauf 20 am Frittierbehälter 4 für vortemperiertes Frittiermedium 21 umfasst. Das vortemperierte Frittiermedium 21 ist in einem Vorratsbehälter 22 vorgehalten, der über eine Fluidleitung 23 mit dem Zulauf 20 verbunden ist. In der Fluidleitung 23 ist eine Pumpe 24 sowie ein Ventil 25 angeordnet, welche die Zugabemenge des vortemperierten Frittiermediums 21 aus dem Vorratsbehälter 22 über den Zulauf 20 in den Frittierbehälter 3 dosiert.

Die Temperatur des vortemperierten Frittiermediums 4 liegt üblicherweise über der Anfangstemperatur 8. In den gezeigten Ausführungsformen wird die Temperatur des vortemperierten Frittiermediums 21 unter anderem durch einen Wärmetauscher 26 erhöht, der in der Fluidleitung 23 angeordnet ist. Selbstverständlich kann auch der Vorratsbehälter 22 mit einer Heizvorrichtung versehen sein, welche das vortemperierte Frittiermedium 21 auf die erwünschte Temperatur bringt.

Die Temperatureinstellung erfolgt maßgeblich über die Menge und/oder die Temperatur des vortemperierten Frittiermediums 21, das über den Zulauf 20 in den Frittierbehälter 4 eingeleitet wird. Auf diese Weise kann die Temperatur des Frittiermediums 4 im Frittierbehälter 3 trotz des bei permeabilisierten Nahrungsmitteln auftretenden starken Temperaturabfalls zu Beginn des Frittierens, sehr schnell auf die Soll-Temperatur gemäß Temperatur-Profil 7 eingestellt werden. Zur Übertragung eines Heizsignals 17 von der Regelvorrichtung 16 an die Pumpe 24 und das Ventil 25 sind weitere Regelleitungen 15 vorgesehen. Es Weiteren könnte eine Regelleitung 15 von der Regelvorrichtung 16 zum Wärmetauscher 26 führen bzw. einer Heizvorrichtung des Vorratsbehälters 22, um die Temperatur des vortemperierten Frittiermediums 21 bei Bedarf zu erhöhen.

Damit der Frittierbehälter 3 nicht überläuft, ist in der gezeigten Ausführungsform ferner ein Ablauf 27 vorgesehen, der mit einer Umlaufleitung 28 mit dem Vorratsbehälter 22 verbunden ist. Der Ablauf kann in einem Auffangbehälter münden. Die in Fig. 1 gezeigte Vorrichtung 1 enthält eine Umwälzvorrichtung 29 umfassend den Ablauf 27, über den Frittiermedium 4 aus dem Frittierbehälter 3 entnommen und über die Umlaufleitung 28 in den Vorratsbehälter 22 geleitet wird. Aus dem Vorratsbehälter wird das vortemperierte Frittiermedium 21 über die Fluidleitung 23 und den Zulauf 20 wieder in den Frittierbehälter 3 zurückgeführt. Die Durchflussmenge der Umwälzvorrichtung 29 kann über die Pumpe 24 und das Ventil 25 eingestellt werden.

Mittels der in Fig. 1 gezeigten Vorrichtung, bei welcher das zeitliche Temperatur-Profil 7 der Fig. 2 in der Kontrolleinrichtung 6 hinterlegt ist, kann ein Verfahren zum Frittieren des Nahrungsmittels 2, dessen Zellmembran permeabilisiert wurde, durchgeführt werden. Dabei wird die Temperatur des Frittiermediums 4, welches das Nahrungsmittel 2 umgibt, von der Anfangstemperatur 8 zu Beginn des Frittierens gemäß dem vorbestimmten Temperatur-Profil 7 kontrolliert auf die Endtemperatur 9 abgesenkt. Das Nahrungsmittel wird in dem gezeigten Ausführungsbeispiel diskontinuierlich frittiert und dabei vortemperiertes Frittiermedium 21 zugeführt, um den überraschend starken Temperaturabfall zu Beginn des Frittierens zu kompensieren. In dem Ausführungsbeispiel wird das Frittiermedium umgewälzt. Durch die Umwälzung kann über die Menge und/oder die Temperatur des vortemperierten Frittiermediums 21 die Temperatur des Frittiermediums 4 im Frittierbehälter 3 schnell und ohne durch die Heizleistung der Fritteuse limitiert zu sein, auf das vorbestimmte Temperatur-Profil eingestellt werden.

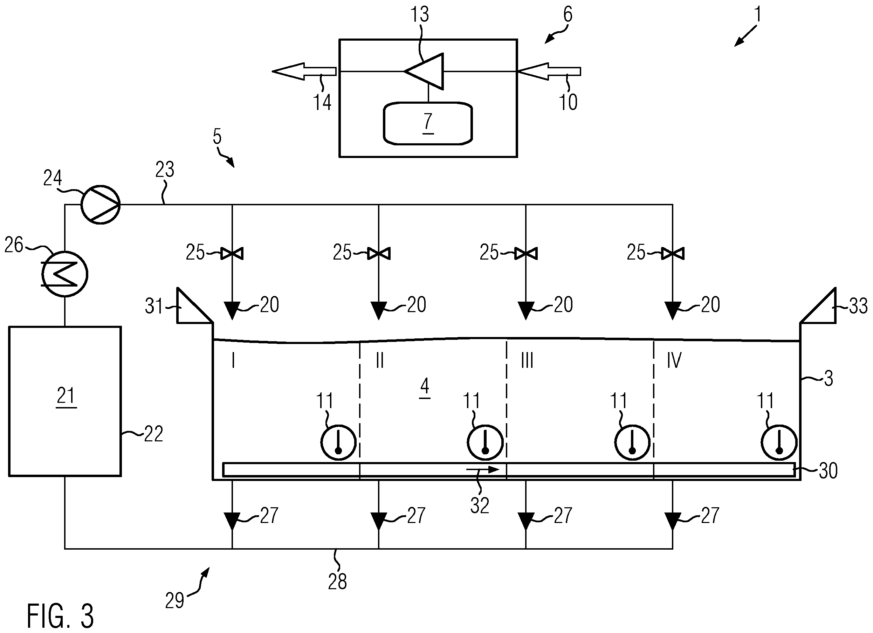

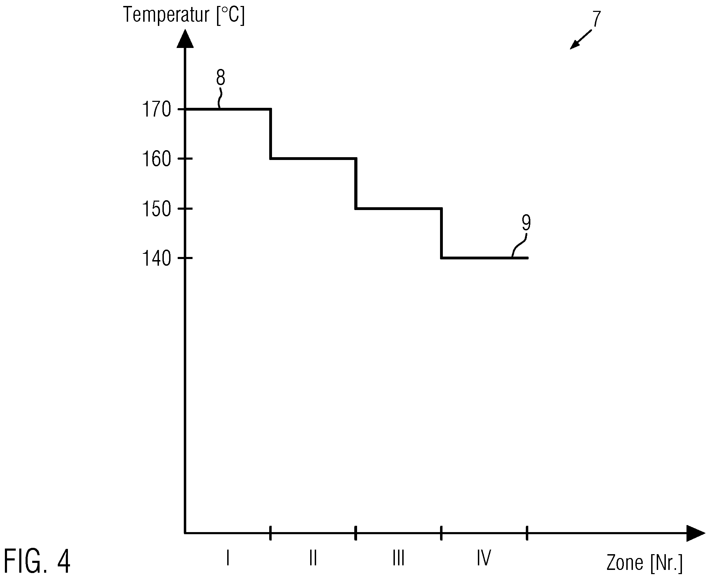

In Fig. 3 ist eine zweite Vorrichtung zur Herstellung eines frittierten Nahrungsmittels gezeigt. Das in der Kontrolleinrichtung 6 der zweiten Vorrichtung hinterlegte Temperatur-Profil 7 ist in Fig. 4 dargestellt. Nachfolgend wird vorrangig auf die Unterschiede der zweiten Vorrichtung 1 im Vergleich zur ersten Vorrichtung aus Fig. 1 eingegangen.

So sind die Signalleitung, die Regelleitung, die Regelvorrichtung, das Heizsignal und die Heizsignalleitung in Fig. 3 der Übersichtlichkeit halber weggelassen.

Die Vorrichtung der Fig. 3 ist zum kontinuierlichen Frittieren des Nahrungsmittels ausgestaltet. Die Vorrichtung 1 umfassten einen Frittierbehälter 3, der in mehrere, im Beispiel in vier verschiedene Temperaturzonen I bis IV unterteilt ist. Die Abgrenzungen der unterschiedlichen Temperaturzonen I bis IV sind durch gestrichelte Linien dargestellt. Dabei handelt es sich um keine Zwischenwände. Die Grenzen zwischen den Zonen sind somit fließend.

Um das Nahrungsmittel 2 durch die einzelnen Zonen I bis IV des Frittierbehälters 3 zu fördern ist eine Transportvorrichtung 30 vorgesehen. Die Transportvorrichtung 30 fördert das Nahrungsmittel 2 von einer Nahrungsmittelzuführung 31 entlang einer Bewegungsrichtung 32, die durch einen Pfeil angedeutet ist, sukzessive durch die Temperaturzonen I bis IV bis zu einer Nahrungsmittelentnahme 33, an der das kontinuierlich frittierte Nahrungsmittel 2 dem Frittierbehälter 3 entnommen wird. Die Transportvorrichtung 30 ist lediglich schematisch dargestellt und kann beispielsweise Paddel oder Bänder umfassen, mit denen das Nahrungsmittel 2 entlang der Bewegungsrichtung 32 durch die verschiedenen Temperaturzonen I bis IV gefördert wird.

In jeder Temperaturzonen I bis IV ist ein separater Sensor 11 zur Erfassung der Temperatur in der jeweiligen Zone angeordnet. Jeder Temperatursensoren 11 ist ausgestaltet, ein für die Temperatur des Frittiermediums 4 in der entsprechenden Temperaturzone I bis IV charakteristisches Temperatursignal 10 auszugeben und an die Kontrolleinrichtung 6 zu übertragen.

Das Temperatur-Profil 7, gemäß dem die Temperatur des Frittiermediums beim kontinuierlichen Frittieren des Nahrungsmittels, während dieses in Bewegungsrichtung 32 durch die Zonen I bis IV mit unterschiedlichen Temperaturen des Frittiermediums 4 bewegt wird, erfindungsgemäß eingestellt wird, ist in Fig. 4 gezeigt. Im vorliegenden Beispiel handelt es sich um ein stufenförmiges, räumliches Temperatur-Profil 7, bei dem die die Temperatur der Zonen I bis IV in Bewegungsrichtung 32 sukzessive abnimmt. Dabei kann die Temperatur in der ersten Zone I bei ca. 170 °C, in der zweiten Zone II bei ca. 165 °C, in der dritten Zone III bei ca. 155 °C und in der vierten Zone IV bei etwa 150 °C liegen. Beim kontinuierlichen Frittieren wird zunächst mit hoher Anfangstemperatur Wasser entfernt und das Nahrungsmittel anschließend bei niedrigen Temperaturen fertig gegart.

Zur kontrollierten Einstellung der gemäß Temperatur-Profil 7 vorgegebenen Soll-Temperatur in der jeweiligen Zone I bis IV wird das Frittiermedium 4 in der jeder der Zonen I bis IV umgewälzt. Dazu ist jeder der Zonen I bis IV ein Zulauf 20 zur Zugabe vortemperierten Frittiermediums 21 sowie ein Ablauf 27 zur Entnahme vom Frittiermedium 4 vorgesehen. Die Abläufe 27 der vier Zonen münden in einer Umwälzleitung 28, die als Sammelleitung ausgestaltet und sämtliches, aus allen vier Abläufen 27 austretendes Frittiermedium gemeinsam in einen Vorratsbehälter 22 führt. Um die Temperatur in jeder Zonen I bis IV individuell und kontrolliert konstant auf die gemäß Temperatur-Profil 7 vorgegebene Temperatur regeln zu können, ist bei der gezeigten Ausführungsform jeder Zulauf 20 unter Kontrolle eines separaten Ventils 25, durch das die Menge des umgewälzten Frittiermediums 4 in der jeweiligen Zone I bis IV kontrolliert wird. Auch wenn es in Fig. 3 nicht dargestellt ist, kann selbstverständlich jede Temperaturzone I bis IV mit einer separaten Umwälzvorrichtung 29 umfassend einen eigenen Ablauf 27, Umlaufleitung 28, Vorratsbehälter 22, Pumpe 24, Wärmetauscher 26, Fluidleitung 23 mit Ventil 25 und Zulauf 20 versehen sein. Auf diese Weise könnte man nicht nur die zugegebene Menge, sondern auch die Temperatur des in die jeweilige Zone I bis IV eingebrachten, vortemperierten Frittiermediums 21 individuell kontrollieren.

Die Aufenthaltszeit des Nahrungsmittels 2 in einer Temperaturzone I bis IV wird über die Fördergeschwindigkeit der Transportvorrichtung 30 eingestellt. Hierbei muss selbstverständlich nicht eine einzelne Transportvorrichtung 30 vorgesehen sein, welche das Nahrungsmittel 2 gleichmäßig durch sämtliche Temperaturzonen I bis IV fördert. Es können auch separate Transportvorrichtungen 30 in jeder der Zonen I bis IV vorgesehen sein. Auf diese Weise könnte man die Verweildauer des Nahrungsmittels in den jeweiligen Zonen I bis IV individuell und unterschiedlich einstellen.

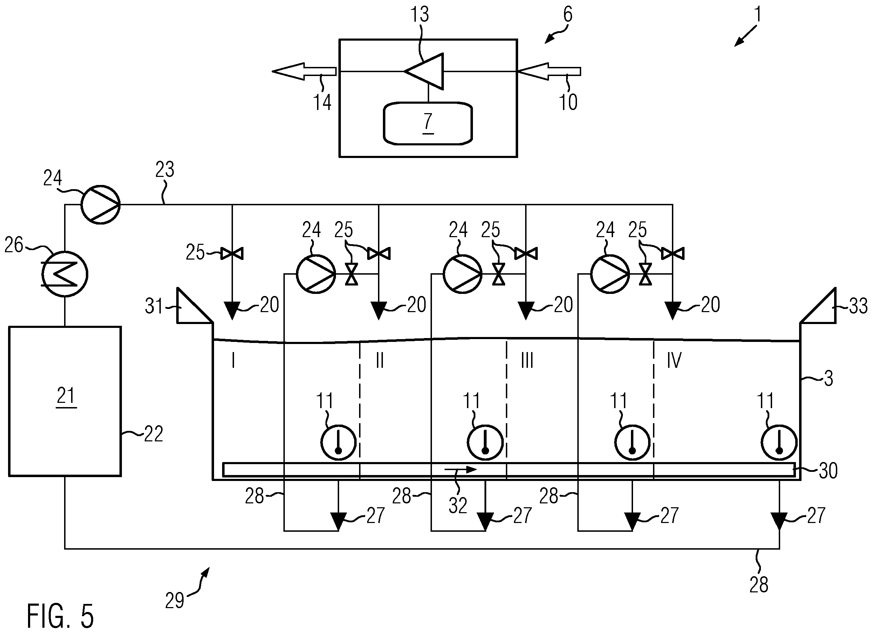

Nachfolgend wird auf eine Ausführungsform einer erfindungsgemäßen Vorrichtung 1 unter Bezugnahme auf die Fig.5 eingegangen. Die in Fig. 5 gezeigten Vorrichtung 1 entspricht in weiten Teilen der in Fig. 3 gezeigten Vorrichtung. Das Temperatur-Profil 7, welches in der Kontrolleinrichtung 6 der in Fig. 5 gezeigten Vorrichtung 1 eingesetzt wird, entspricht dem Temperatur-Profil 7 der Fig. 4.

Nachfolgend wird auf die Unterschiede der Ausführungsform aus Fig. 5 im Vergleich zur Vorrichtung der Fig. 3 eingegangen.

Bei der Vorrichtung 1 der Fig. 5 sind die Abläufe 27 nicht an eine Sammelleitung, also eine gesammelte Umlaufleitungen 28 angebunden, welche die Abläufe 27 sämtlicher Zonen I bis IV mit dem Vorratsbehälter 22 verbinden. Bei der in Fig. 5 gezeigten Ausführungsform wird das aus einer Zone entnommene Frittiermedium 4 in eine in Bewegungsrichtung nachgelagerte Zone, in der beispielhaften Ausführungsform in die unmittelbar folgende Zone eingeleitet. Das über den Ablauf 27 der Zone I entnommene Frittiermedium 4 wird über den Zulauf 20 der Zone II wieder in den Frittierbehälter 3 eingeleitet. Dazu ist eine Umlaufleitung 28 vom Ablauf 27 mit dem Zulauf 20 der nachgelagerten Temperaturzone verbunden. In der Umlaufleitung 28 ist eine Pumpe 24 und ein eigenes Ventil 25 angeordnet, um die Menge des umgewälzten, von einer Zone in eine nachgelagerte Zone transportierten Frittiermediums 4 zu kontrollieren. Analoge Umwälzvorrichtungen 29 umfassend eine Umlaufleitung 28 mit Pumpe 24 und Ventil 25 sorgen für die Umwälzung von Frittiermedium 4 aus Zone II in Zone III bzw. Zone III in Zone IV. Der Ablauf 27 in der Zone IV ist über eine Umlaufleitung 28 mit dem Vorratsbehälter 22 verbunden. Das vortemperierte Frittiermedium 21 aus dem Vorratsbehälter 22 wird zum Zulauf 20 der ersten Zone geführt.

In Bewegungsrichtung 32 sind die Zuläufe 20 der Zonen I bis IV jeweils gleich zu Beginn und die Abläufe 27 am Ende der jeweiligen Zone, kurz vor dem Übergang zur nächsten Zone, angeordnet. Auf diese Weise unterstützt die Umwälzung des Frittiermediums den Transport des Nahrungsmittels in Bewegungsrichtung 32, was ebenfalls eine individuellere Kontrolle der Verweilzeit des Nahrungsmittels in einer Zone I bis IV bewerkstelligen kann. Eine Ausführungsform, bei welcher Frittiermedium aus einer Zone in eine nachgelagerte Zone umgewälzt wird, eignet sich insbesondere für ein kontinuierliches Verfahren zum Frittieren, bei welchem die Temperatur in den Zonen in Bewegungsrichtung sukzessive abnimmt. Auf diese Weise wird das wärmere Frittiermedium 4 einer vorgelagerten Zone in eine nachgelagerte Zone transferiert, in der gemäß Temperatur-Profil 7 ein niedrigere Temperatur des Frittiermediums einzustellen ist. Sollte die Umwälzung von Frittiermedium aus einer Zone in eine nachgelagerte Zone nicht ausreichen, um das erwünschte Temperatur-Profil 7 im Frittierbehälter 3 einzustellen, kann zusätzlich vortemperiertes Frittiermedium 21 aus dem Vorratsbehälter 22 über die Fluidleitung, kontrolliert über Ventile 25 jedem der Zuläufe 20 in seiner Menge dosiert zugeführt werden.

In einer weiteren, nicht gezeigten Ausführungsform könnte auch lediglich ein Zulauf 20 im Bereich der Nahrungsmittelzuführung 31 und ein Ablauf 27 im Bereich der Nahrungsmittelentnahme 23 vorgesehen sein. In diesem Fall könnte auf eine mechanische Fördereinrichtung 30, beispielsweise in Form von Paddeln oder Bändern verzichtet und stattdessen das Frittiermedium als Fördermedium eingesetzt werden, welches das Nahrungsmittel von Nahrungsmittelzuführung 31 zur Nahrungsmittelentnahme 30 aufgrund seiner Umwälzung transportiert.

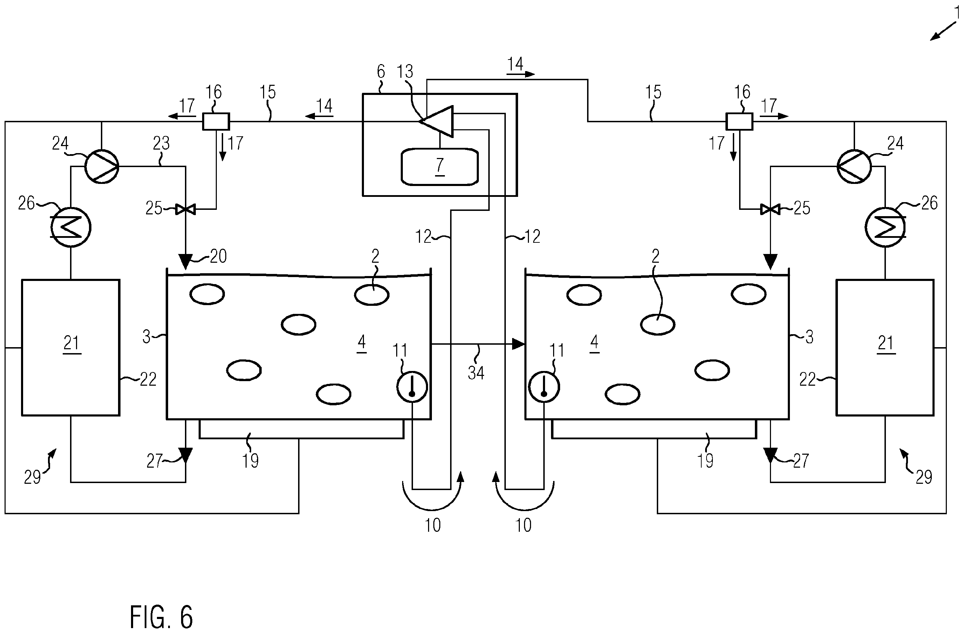

Abschließend wird auf eine vierte beispielhafte Vorrichtung 1 unter Bezugnahme auf Fig. 6 eingegangen. Die Vorrichtung 1 der Fig. 6 umfasst zwei Frittierbehälter 3, die Reihe angeordnet sind. Eine Übergabevorrichtung 34 ist zum Transport und Transferieren des Nahrungsmittels aus dem einen in den anderen Frittierbehälter vorgesehen. Die Übergabevorrichtung 34 ist in Fig. 6 lediglich schematisch durch einen Pfeil angedeutet.

Die Vorrichtung 1 der Fig. 1 ist im Wesentlichen eine Kombination aus zwei Batch-Vorrichtungen gemäß Fig. 1, wobei lediglich eine einzelne Kontrolleinrichtung 6 vorgesehen ist, in der ein Temperatur-Profil 7 hinterlegt. In der Vergleichseinrichtung 13 der Kontrolleinrichtung 6 aus Fig. 6 gehen die Temperatursignale 10 des jeweiligen Sensors 11 aus den beiden Frittierbehältern 3 ein. Diese Temperatursignale 10 werden mit den vorgegebenen Werten des Temperatur-Profils 7 verglichen und im Falle einer Abweichung des von den Sensoren 11 gemessenen Ist-Wertes von dem durch das Temperatur-Profil 7 vorgegebenen Soll-Wert wird ein Regelsignal 14 über eine entsprechend Regelleitung 15 an eine Regelvorrichtung 16 ausgegeben. Dabei umfasst jeder der beiden in Reihe angeordneten Frittierbehälter 3 einen separaten Regelkreis mit eigener Regelvorrichtung 16, Vorratsbehälter 22 mit vortemperiertem Frittiermedium 21, Umwälzvorrichtung 29 zur Einstellung einer erwünschten Temperatur des vortemperierten Frittiermediums 21 bzw. der Menge des Mediums in dem jeweiligen Frittierbehälter 3.

### Bezugszeichen

- 1: Vorrichtung
- 2: Nahrungsmittel
- 3: Frittierbehälter
- 4: Frittiermedium
- 5: Temperiervorrichtung
- 6: Kontrolleinrichtung
- 7: Temperatur-Profil
- 8: Anfangstemperatur
- 9: Endtemperatur
- 10: Temperatursignale
- 11: (Temperatur-)Sensor
- 12: Temperatursignalleitung
- 13: Vergleichseinrichtung
- 14: Regelsignal
- 15: Regelleitung
- 16: Regelvorrichtung
- 17: Heizsignal
- 18: Heizsignalleitung
- 19: Heizvorrichtung
- 20: Zulauf
- 21: vortemperiertes Frittiermedium
- 22: Vorratsbehälter
- 23: Fluidleitung
- 24: Pumpe
- 25: Ventil
- 26: Wärmetauscher
- 27: Ablauf
- 28: Umlaufleitung
- 29: Umwälzvorrichtung
- 30: Temperiervorrichtung
- 31: Nahrungsmittelzuführung
- 32: Bewegungsrichtung
- 33: Nahrungsmittelentnahme
- 34: Übergabevorrichtung

- I: erste Temperaturzone
- II: zweite Temperaturzone
- III: dritte Temperaturzone
- IV: vierte Temperaturzone

## Patentansprüche

1. Verfahren zum Frittieren eines Nahrungsmittels (2), dessen Zellmembran permeabilisiert wurde, wobei die Temperatur eines Frittiermediums (4), welches das Nahrungsmittel (2) umgibt, von einer Anfangstemperatur (8) zu Beginn des Frittierens gemäß einem vorbestimmten Temperatur-Profil (7) kontrolliert auf eine Endtemperatur (9) abgesenkt wird, wobei das Nahrungsmittel (2) kontinuierlich frittiert und dabei entlang einer Bewegungsrichtung (32) durch Zonen (I bis IV) mit unterschiedlichen Temperaturen des Frittiermediums (4) bewegt wird, und wobei das aus einer Zone (I bis III) entnommene Frittiermedium (4) in eine in Bewegungsrichtung (32) nachgelagerte Zone (II bis IV) eingeleitet wird.

2. Verfahren gemäß Anspruch 1, wobei die Temperatur der Zonen (I bis IV) in Bewegungsrichtung (32) sukzessive abnimmt.

3. Verfahren gemäß einem der Ansprüche 1 und 2, wobei die Temperatur in jeder Zone (I bis IV) konstant gehalten wird.

4. Verfahren gemäß einem der Ansprüche 1 bis 3, wobei die Temperatur in der in Bewegungsrichtung (32) ersten Zone (I) bei höchsten 175 °C und in der in Bewegungsrichtung (32) letzten Zone (IV) bei über 140 °C liegt.

5. Verfahren gemäß einem der Ansprüche 1 bis 4, wobei die Temperatur des Frittiermediums (4) in einer Zone (I bis IV) durch die Menge und/oder die Temperatur des in die Zone (I bis IV) einfließenden Frittiermediums kontrolliert wird.

6. Verfahren gemäß einem der Ansprüche 1 bis 5, wobei das Frittiermedium (4) in jeder Zone (I bis IV) umgewälzt wird.

7. Verfahren gemäß einem der Ansprüche 1 bis 6, wobei das Frittiermedium (4) umgewälzt wird.

8. Vorrichtung (1) zur Herstellung eines frittierten Nahrungsmittels (2), dessen Zellmembran permeabilisiert wurde, insbesondere zur Durchführung des Verfahrens gemäß einem der Ansprüche 1 bis 7, die mindestens einen Frittierbehälter (3) zur Aufnahme eines Frittiermediums (4) und des zu frittierenden Nahrungsmittels (2), wenigstens eine Temperiervorrichtung (5) zur Einstellung der Temperatur des Frittiermediums (4) im Frittierbehälter (3), eine Transportvorrichtung (30) zum Fördern des Nahrungsmittels (2) entlang einer Bewegungsrichtung (32) durch den wenigstens einen Frittierbehälter (3) und eine Kontrolleinrichtung (6), in der ein Temperatur-Profil (7) mit einer Anfangstemperatur (8) und einer unter der Anfangstemperatur (8) liegenden Endtemperatur (9) hinterlegt ist, umfasst, wobei die Kontrolleinrichtung (6) ausgebildet ist, Temperatursignale (10) an die wenigstens eine Temperiervorrichtung (5) zu senden und dadurch die Temperatur des Frittiermediums (4) im Frittierbehälter (3) gemäß dem Temperatur-Profil (7) einzustellen, wobei der Frittierbehälter (3) in wenigstens zwei Zonen (I bis IV) unterteilt ist und wobei die Temperiervorrichtung (5) in jeder der Zonen (I bis IV) ein Zulauf (20) zur Zugabe eines vortemperierten Frittiermediums (21) sowie ein Ablauf (27) zur Entnahme vom Frittiermedium (4) umfasst und eine Umlaufleitung (28), die den Ablauf (27) einer Zone (I, II, III) mit dem Zulauf (20) der nachgelagerten Zone (II, III, IV) verbindet.

9. Vorrichtung (1) gemäß Anspruch 8, die wenigstens einen Sensor (11) zur Erfassung der Temperatur des Frittiermediums (4) im Frittierbehälter (3) umfasst.

10. Vorrichtung (1) gemäß einem der Ansprüche 8 und 9, wobei wenigstens zwei Frittierbehälter (3) in Reihe angeordnet sind.

## Claims

1. A method for deep-frying food (2) the cell membrane of which has been permeabilized, wherein the temperature of a deep-frying medium (4) surrounding the food (2) is controlled to be lowered from an initial temperature (8) at the start of deep-frying to a final temperature (9) in accordance with a predetermined temperature profile (7), wherein the food (2) is continuously deep-fried while being moved along a direction of movement (32) through zones (I to IV) with different temperatures of the deep-frying medium (4), and wherein the deep-frying medium (4) discharged from one zone (I to III) is introduced into another zone (II to IV) downstream in the direction of movement (32).

2. The method according to claim 1, wherein the temperature of the zones (I to IV) decreases successively in the direction of movement (32).

3. The method according to any one of claims 1 and 2, wherein the temperature in each zone (I to IV) is kept constant.

4. The method according to any one of claims 1 to 3, wherein the temperature in the first zone (I) in the direction of movement (32) is at most 175 °C and in the last zone (IV) in the direction of movement (32) is above 140 °C.

5. The method according to any one of claims 1 to 4, wherein the temperature of the deep-frying medium (4) in a zone (I to IV) is controlled by the amount and/or the temperature of the deep-frying medium flowing into the zone (I to IV).

6. The method according to any one of claims 1 to 5, wherein the deep-frying medium (4) is circulated in each zone (I to IV).

7. The method according to any one of claims 1 to 6, wherein the deep-frying medium (4) is circulated.

8. An apparatus (1) for producing a deep-fried food product (2) the cell membrane of which has been permeabilized, in particular for carrying out the method according to any one of claims 1 to 7, comprising at least one deep-frying container (3) for holding a deep-frying medium (4) and the food (2) to be deep-fried, at least one temperature control device (5) for adjusting the temperature of the deep-frying medium (4) in the deep-frying container (3), a transport device (30) for conveying the food (2) along a direction of movement (32) through the at least one deep-frying container (3), and a control device (6) in which a temperature profile (7) with an initial temperature (8) and an end temperature (9) below the initial temperature (8) is stored, wherein the control device (6) is configured to send temperature signals (10) to the at least one temperature control device (5) and thereby adjust the temperature of the deep-frying medium (4) in the deep-frying container (3) in accordance with the temperature profile (7), wherein the deep-frying container (3) is divided into at least two zones (I to IV) and wherein the temperature control device (5) in each of the zones (I to IV) comprises an inlet (20) for supplying a frying medium (21) at a controlled temperature and an outlet (27) for discharging the deep-frying medium (4), and a circulation line (28) which connects the outlet (27) of one zone (I, II, III) to the inlet (20) of the zone (II, III, IV) downstream thereof.

9. The apparatus (1) according to claim 8, comprising at least one sensor (11) for detecting the temperature of the deep-frying medium (4) in the deep-frying container (3).

10. The apparatus (1) according to any one of claims 8 and 9, wherein at least two deep-frying containers (3) are arranged in series.

## Revendications

1. Procédé de friture d'un aliment (2) dont la membrane cellulaire a été perméabilisée, dans lequel la température d'un milieu de friture (4) qui entoure l'aliment (2) est abaissée de manière contrôlée d'une température initiale (8) au début de la friture à une température finale (9) selon un profil de température prédéterminé (7), dans lequel l'aliment (2) est frit en continu et est déplacé le long d'un sens de déplacement (32) à travers des zones (I à IV) présentant différentes températures du milieu de friture (4), et dans lequel le milieu de friture (4) prélevé d'une zone (I à III) est introduit dans une zone (II à IV) située en aval dans le sens de déplacement (32).

2. Procédé selon la revendication 1, dans lequel la température des zones (I à IV) diminue successivement dans le sens de déplacement (32).

3. Procédé selon l'une des revendications 1 et 2, dans lequel la température est maintenue constante dans chaque zone (I à IV).

4. Procédé selon l'une quelconque des revendications 1 à 3, dans lequel la température dans la première zone (I) dans le sens de déplacement (32) est supérieure à 175 °C et dans la dernière zone (IV) dans le sens de déplacement (32) est supérieure à 140 °C.

5. Procédé selon l'une quelconque des revendications 1 à 4, dans lequel la température du milieu de friture (4) dans une zone (I à IV) est contrôlée par la quantité et/ou la température du milieu de friture s'écoulant dans la zone (I à IV).

6. Procédé selon l'une quelconque des revendications 1 à 5, dans lequel on fait circuler le milieu de friture (4) dans chaque zone (I à IV).

7. Procédé selon l'une quelconque des revendications 1 à 6, dans lequel on fait circuler le milieu de friture (4).

8. Dispositif (1) de fabrication d'un aliment frit (2) dont la membrane cellulaire a été perméabilisée, notamment pour la mise en œuvre du procédé selon l'une des revendications 1 à 7, qui comprend au moins une cuve de friture (3) destinée à recevoir un milieu de friture (4) et l'aliment à frire (2), au moins un dispositif de régulation de température (5) destiné à régler la température du milieu de friture (4) dans la cuve de friture (3), un dispositif de transport (30) pour transporter l'aliment (2) le long d'un sens de déplacement (32) à travers l'au moins une cuve de friture (3) et un dispositif de contrôle (6) dans lequel est consigné un profil de température (7) avec une température initiale (8) et une température finale (9) située en dessous de la température initiale (8), dans lequel le dispositif de contrôle (6) est conçu pour envoyer des signaux de température (10) à l'au moins un dispositif de régulation de température (5) et pour régler ainsi la température du milieu de friture (4) dans la cuve de friture (3) conformément au profil de température (7), dans lequel la cuve de friture (3) est divisée en au moins deux zones (I à IV) et dans lequel le dispositif de régulation de température (5) comprend dans chacune des zones (I à IV) une arrivée (20) pour l'ajout d'un milieu de friture pré-tempéré (21) ainsi qu'une sortie (27) pour le prélèvement du milieu de friture (4) et une conduite de circulation (28) qui relie la sortie (27) d'une zone (I, II, III) à l'arrivée (20) de la zone (II, III, IV) située en aval.

9. Dispositif (1) selon la revendication 8, qui comprend au moins un capteur (11) pour détecter la température du milieu de friture (4) dans la cuve de friture (3).

10. Dispositif (1) selon l'une des revendications 8 et 9, dans lequel au moins deux cuves de friture (3) sont disposées en série.
